# EUROPEAN PATENT SPECIFICATION

(11) **EP 3 337 970 B1**
(45) Date of publication and mention of the grant of the patent: **30.10.2019**
(21) Application number: 16788208.3
(22) Date of filing: 02.09.2016
(51) Int. Cl.: F03B 3/10, F03B 13/10

(54) **DEVICE FOR CONTROL AND ENERGY CONVERSION OF A HYDRAULIC FLOW**
VORRICHTUNG ZUR KONTROLLE UND ENERGIEUMWANDLUNG EINER HYDRAULISCHEN STRÖMUNG
DISPOSITIF DE COMMANDE ET CONVERSION ÉNERGÉTIQUE D'UN DÉBIT HYDRAULIQUE

(30) Priority: 03.09.2015 IT UB20153383
(43) Date of publication of application: 27.06.2018
(73) Proprietor: Caprari S.p.A., 41123 Modena (IT)
(72) Inventor: ANTIPODI, Lauro, 41123 Modena (IT)
(74) Representative: Manzella & Associati
(86) International application number: PCT/IB2016/055276
(87) International publication number: WO 2017/037674

(56) References cited:
- EP-A1- 1 215 393
- EP-A2- 0 784 156
- WO-A2-2007/036943
- US-A- 4 963 780
- US-A- 5 209 650
- US-A1- 2006 186 671
- US-A1- 2012 091 711

## Description

### Technical field

The present invention concerns an energy control and recovery assembly from a hydraulic flow, intended for use, in particular but not only, in hydraulic networks for water conveying and supplying.

### Prior art

It has been known, in the field of hydraulic networks such as for example for conveying and supplying water for domestic use and the like, the use of control devices for reducing pressure in the network through the dissipation of the excess hydraulic load. For example, control valves are used to reduce the flow cross-section, so as to locally increase the kinetic power of the stream and obtaining a sudden downstream deceleration of the flow. The power dissipation is determined by the intense whirlpools induced by the sudden deceleration of the flow.

These known devices are usually equipped with automatic control means, predisposed to divide the flow cross-section in an automatic way, so as to maintain in the downstream duct a predetermined and optimal pressure value.

The use of such known devices has the disadvantage of dissipating the excess power, without providing for any possibility of recovery. On the other hand, it is currently being observed an increasingly marked interest in technical solutions that involve the enhancement and recovery of that excess power.

Some devices have been proposed for recovering the excess power in the hydraulic pipelines.

For example, WO2004/061296 discloses a reduction valve of the fluid pressure in a distribution network of the same fluid. The device comprises a Pelton turbine arranged inside a containment casing, crossed by the fluid, to generate power through said pressure reduction. The aforementioned casing contains, in addition to the crossing fluid, also air at a pressure equal to that required in the distribution network disposed downstream of the turbine. This device presents the drawback of requiring special means, such as for example a compressor member, to maintain air pressure within the casing containing the Pelton turbine, as well as the risk that the pressurized air is drawn downstream in the distribution network, creating air pockets in the highest points, potentially harmful to the integrity of the system.

WO2006/053878 discloses a device made up of a pair of concentric ducts. In a central duct there is an axial turbine, while in an outer duct there is a pneumatic closing device of the membrane type. By dividing the portion of the outer duct, the flow rate entering the turbine varies, as well as the pressure drop performed by the same. In this device the turbine and the motor member can move along the duct axis up to completely closing the same duct, thus realizing dissipations also greater than the maximum quota allowed by the turbine. However, it should be observed that the axial turbine of this known solution operates at a high number of revolutions, thereby requiring complex transmission and power generation systems. Moreover, this known device can dissipate reduced pressure drops, of the range of a few meters, with production of electric power.

US 2006/0186671 A1 discloses a submerged generator-turbine assembly, operated by a working fluid, such as liquid nitrogen, liquefied natural gas or liquid ethylene, to generate electric power. The submerged turbine-generator assembly comprises a shaft, a casing, a turbine equipped with an impeller integral to the shaft, a generator provided with a rotor integral to the shaft and a stator disposed around the rotor, and supports for the rotary support of the shaft. The impeller is rotated integrally with the shaft by the pressure of the working fluid introduced in the casing. The turbine-generator assembly also comprises a mechanism of stabilization of the axial thrust exerted by the shaft of the working fluid. This system comprises the combination of a fixed gap and a variable gap, respectively defined between fixed and mobile parts of the assembly, between which, during operation, a variable-pressure chamber is defined, in which a part of the working fluid flow acts for the compensation of the axial thrust. The compensation system produces during operation an axial alternated and continuous movement of the shaft.

EP 0 784 156 A2 discloses a submerged hydraulic turbine-generator assembly, mounted on a single shaft and comprising a radial turbine equipped with a thrust compensation mechanism operated by a portion of the hydraulic fluid applied to the impeller of the turbine and by axial support means, to compensate the thrusts through a slight axial bidirectional movement of the support means and of the members mounted on the shaft and of an induction generator operated by the turbine. The fluid is supplied to the assembly at pre-set pressure and speed, so as to control the speed of the turbine. EP 1215393 A1 discloses a generator-turbine hydraulic assembly mounted on a single shaft, wherein the turbine comprises a plurality of stages of the hydraulic -reaction type, operated by the hydraulic working fluid. The assembly also comprises the axial thrust compensation mechanism disclosed in the above mentioned EP 0 784 156 A2.

WO 2007/036943 A2 discloses a hydroelectric generator installed inside a piping. In particular, the turbine rotor is magnetized so as to act as inductive magnets, for the production of electric power, in cooperation with inductive coils arranged on the outside of the same piping.

In general, the known solutions employ equipment difficult to use, and therefore of little diffusion, in the field of water supply, where a continuous monitoring of fluid dynamic parameters is required, in particular of the value of the pressure of the fluid introduced into the hydraulic network. In particular, in the field of water supply networks intended for civilian use, it is required that the value of the pressure, for the supplied hydraulic flow, is maintained substantially constant and/or below a maximum value.

Therefore, the proposed solutions do not fully satisfy the needs of the specific technical field, resulting structurally complex as well as not fully reliable in all conditions of use.

### Presentation of the invention

The task of the present invention is to solve the cited problems, by providing an energy control and recovery assembly from a hydraulic flow, intended, in particular, for use in a conveying and supplying network, which allows to control or keep at a predetermined value the pressure downstream of the same assembly in a reliable manner.

Within such task, it is a further scope of the present invention to provide an energy control and recovery assembly from a hydraulic flow which allows to adjust the pressure of the outgoing fluid in automatic manner.

A further scope of the invention is to provide an energy control and recovery assembly of simple constructive and functional conception, provided with surely reliable functioning as well as relatively economic cost.

The cited scopes are reached, according to the present invention, by the energy control and recovery assembly from a hydraulic flow according to claim 1.

The energy control and recovering assembly from a hydraulic flow comprises a centrifugal pump member, suitably modified for a reverse cycle operation, i.e. a turbine operation, predisposed to at least partially convert the power of a crossing hydraulic flow into mechanical power, and an electric power generator member connected to the pump member, to convert the mechanical power, converted by the pump member, into electric power.

The pump member comprises at least one hydraulic stage, in turn comprising an impeller integral to the shaft of the same pump member, and a diffuser member shaped by the containment body of the pump member.

The energy control and recovery assembly comprises as well an adjustment device, predisposed to allow the adjustment of the fluid pressure outgoing from the same assembly. More precisely, the adjustment device comprises axial handling means for the at least one impeller integral to the shaft of the pump member, predisposed to vary the hydraulic flow that crosses the above mentioned impeller, thus diverting a part thereof towards an outlet portion from the at least one hydraulic stage, so as to keep constant, in particular equal to a predetermined and optimum value, the fluid pressure in the duct downstream of the energy control and recovery assembly.

More precisely, such handling means are predisposed to axially move the impeller of the at least one hydraulic stage comprised in the pump member, thus creating a gap between the same impeller and a portion of the body of the pump member shaping the diffuser member of the same hydraulic stage, through which at least a part of the hydraulic flow is directly diverted towards the outlet portion of the same hydraulic stage.

As a result, the hydraulic flow directed towards the axially moved impeller is reduced in a corresponding manner. In particular, the flow incoming through the inlet portion of the hydraulic stage is divided into a part that crosses the impeller of the respective hydraulic stage, contributing to the energy recovery, and in a remaining part, the said diverted part, which by-passes the impeller, and circulates through the aforesaid gap, without contributing to the energy recovery.

More precisely, the only part of the hydraulic flow which crosses the impeller contributes to the power recovery, that is, to the conversion of the power of the incoming flow into mechanical power, thus contributing to generate a rotation motion of the pump member. The power associated with this rotation motion, as it is known, can be converted into electric power by the generator member.

According to a particular aspect of the invention, the generator member may be an asynchronous electric motor member of the submerged type, suitably modified, functioning with reverse cycle.

According to a particular aspect of the invention, it is possible to shape at least one between the impeller and the diffuser member according to a determined hydraulic profile, calculated so as to determine, after a determined displacement of the shaft of the pump member integral to the at least one impeller member, a determined partition of the hydraulic flow between the impeller and the said gap. In substance, by varying the profile of the hydraulic components, it is possible to impose a certain separation of the hydraulic flow, following the aforementioned axial displacement, to obtain, by the reverse functioning of the pump member, a given range of pressure differences for the crossing fluid and, then, of power recovery.

The above-mentioned handling means may comprise dynamic contrast means, for example of elastic or pneumatic type, predisposed to automatically control the displacement of the shaft of the pump member, as a function of the axial thrust acting on the pump member.

According to a particular aspect of the invention, the cited dynamic contrast means only require a starting adjustment, depending on the conditions of use, for then ensuring, in use, an automatic adjustment of the parameters of the fluid circulating in the network, downstream of the same assembly. In practice, this starting adjustment is similar to that performed on the known valve devices, of pressure reduction, that, unlike the assembly according to the invention, dissipate power and do not permit any power recovery.

In particular, the energy control and recovery assembly according to the invention allows to obtain pressure variations through the axial displacement of the shaft of the pump member, keeping constant the rotation speed of the same shaft.

This feature allows to connect the assembly to the electric network without the interposition of a complex and expensive electronic device, which, otherwise, would be required to convert the variable-frequency alternating current outgoing from the generator member into direct current and then again convert it to alternating current at a fixed network frequency. For example, if the energy control and recovery assembly according to the invention is connected to a 50 Hz electric network and the generator member winding is a 2-pole one, the assembly works at a substantially stable rotation speed and next to 3050 rpm, which is the synchronous speed. In this way, when the assembly reaches the synchronous rotation speed, in particular by a reduction of the flow rate demand, it is possible to electrically connect the assembly directly to the network using a simple and inexpensive electronic device, so that from this moment the network keeps the assembly at the synchronous speed during the power generation. When instead the assembly detects a decrease in the power generation, in particular further to an increase in the flow rate demand into the network, and thus the rotation speed lowers below the synchronous speed, it is possible to automatically disengage the assembly from the electric network by the same aforementioned electronic device.

The energy control and recovery assembly is particularly advantageous, in particular for use in an aqueduct network, since it is self-adjusting.

In fact, as it is known, a large water network is usually divided into zones supplied by respective access points, called nodes. When a node is located next to the supplying point of the network, the pressure in the downstream area of the node is usually excessive, and therefore must be reduced by a suitable device arranged in the inlet node to the area, such as a pressure-reducing valve, of known type, that does not allow any power recovery, or the control and recovery assembly according to the invention, which instead allows a rather effective power recovery. In addition, during the daily/seasonal operation, the flow rate demand by each zone is considerably variable, reaching maximum values in the middle of the day and minimum at night. Such a continuous variation of flow rate to the single node determines, for the pressure drops that vary in the network, a continuous variation of the pressure both upstream and downstream of the node. The self-regulating capacity of the assembly according to the invention is thus very advantageous as the said adjusting device allows to automatically adapt the assembly to the needs of use, by an axial displacement of the shaft of the pump member, resulting from the contrast action exerted by the same device.

In fact, when the water demand is high and therefore, for the high water speed, pressure drops within the same network increase, the assembly is able to automatically generate the required minimum pressure drop. Otherwise, when the water demand is minimum, and, therefore, the pressure drops within the same network are minimum because of the reduced water outflow speed in the ducts, the assembly is able to automatically generate the required maximum pressure drop.

In practice, the energy control and recovery assembly according to the invention is able to generate the highest pressure drop and the maximum electrical generation when the required flow rate is at the minimum daily/seasonal value. By contrast, the control and recovery assembly according to the invention is able to generate the lowest pressure drop and the minimum or null electric power generation when the required flow is at the maximum daily/seasonal value.

The energy control and recovery assembly according to the invention can also be installed in a versatile manner in any fluid distribution network, preferably within a by-pass duct associated with a portion of the same network.

The control and recovery assembly, in particular, can be advantageously installed in an underground well, in any configuration, for example with the pump member having horizontal or vertical axis.

According to a prerogative of the invention, the energy control and recovery assembly uses industrial components easy to find on the market. Under this profile, it is particularly advantageous providing a submerged centrifugal pump of known type, with reverse cycle operation, i.e. with turbine operation. It is also advantageous providing an asynchronous submersible motor of known type functioning with reverse cycle, i.e. as a generator.

Furthermore, the control and recovery assembly can be immersed directly in the working fluid, in particular thanks to the provision of a centrifugal pump and of a motor member, in particular an asynchronous motor, normally used in submerged condition.

It is important to remark also that the submerged installation allows an efficient cooling of the generator member through the same working fluid, without requiring additional cooling means.

The assembly according to the invention is therefore of easy and cheap construction, as well as versatile in use.

### Description of the drawings

The details of the invention shall be more apparent from the detailed description of a preferred embodiment of the energy control and recovery assembly according to the invention, illustrated by way of example in the attached drawings, wherein:
Figure 1 shows a cross-sectional view of an installation arrangement of the energy control and recovery assembly according to the invention;
Figure 2 shows an axial cross-sectional view of the energy control and recovery assembly according to the invention;
Figures 2a and 2b show a magnified view of a portion of a pump member with turbine functioning, used in the assembly illustrated in Figure 2, in two different working conditions,
Figures 2c and 2d show a magnified view of a portion of an adjustment device used in the assembly illustrated in Figure 2, in two working conditions, corresponding to those illustrated in Figures 2a and 2b respectively;
Figures from 3a a 3c show an axial cross-sectional view of portion of a detail of the same pump member with turbine functioning, in different working conditions;
Figure 4 shows an axial cross-sectional view of a portion of a pump detail of the same pump member with turbine functioning used in the assembly according to the invention, in which each half-cross-section shown a respective working condition;
Figures 5, 6 and 7 show respectively different further installation arrangements, in cross-section, of the energy control and recovery assembly according to the invention;
Figure 8 shows a plant view of the installation arrangement shown in Figure 7;

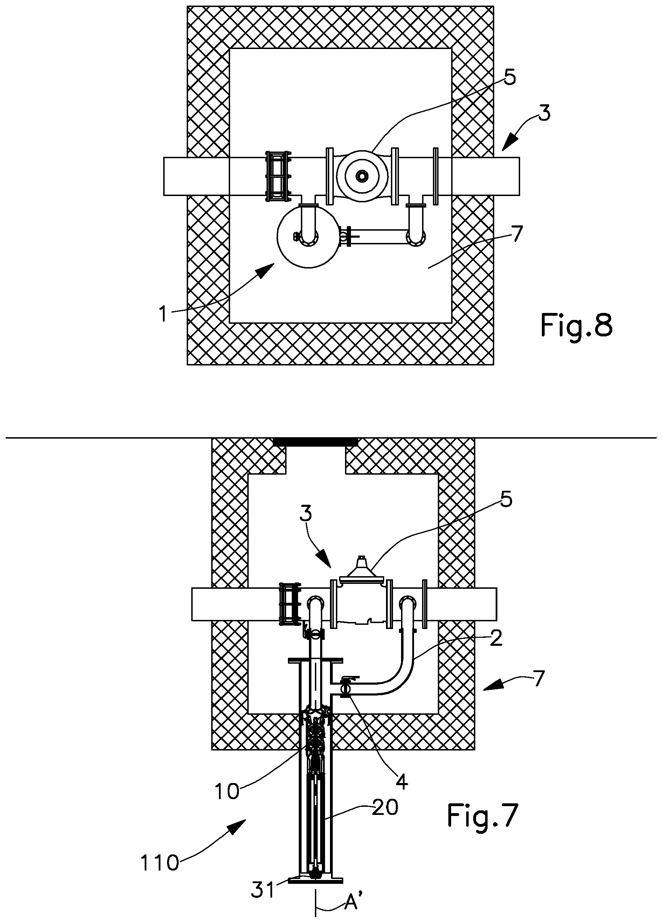

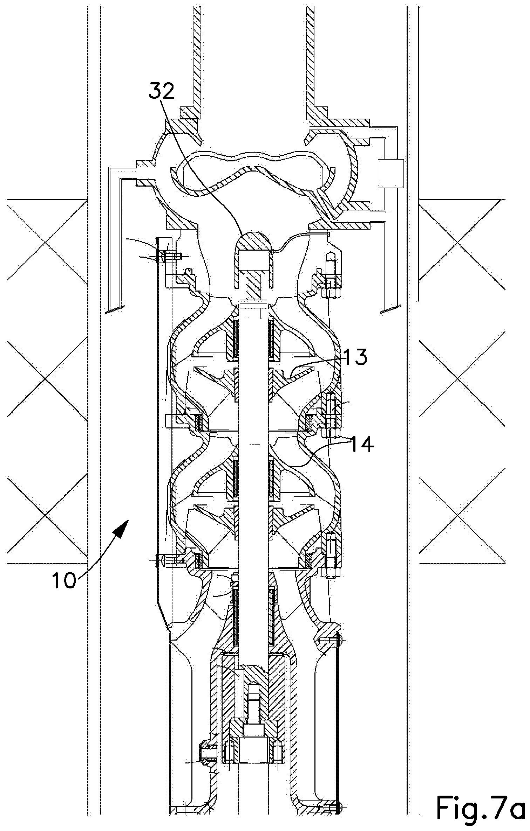

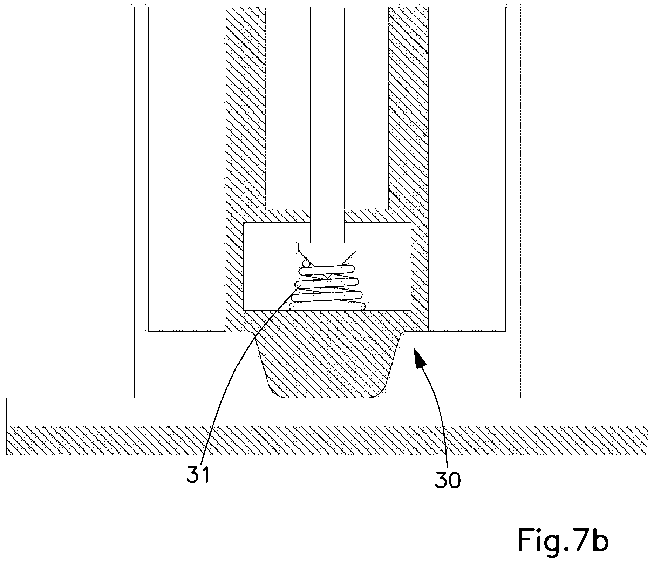

Figures 7a and 7b respectively show a magnified cross-sectional view of portions of the energy control and recovery assembly shown in Figure 7;

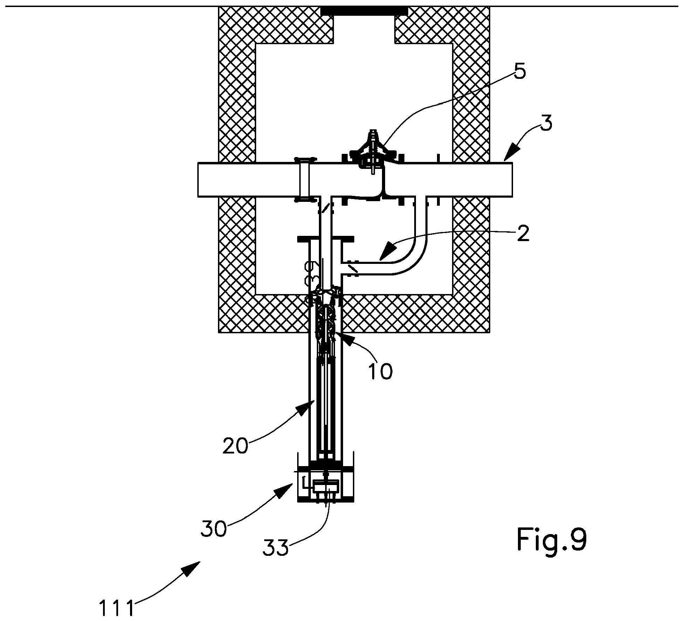

Figure 9 shows a cross-sectional view of a further installation arrangement of the energy control and recovery assembly according to the invention.

### Embodiments of the invention

With particular reference to such figures, an energy control and recovery assembly, predisposed to produce electric power from the at least partial conversion of the power of a hydraulic flow by the assembly itself, has been indicated in its entirety with 1.

The assembly 1 is placed inside a duct 2 in a hydraulic network, with the aim of recovering, at least partially, power from the circulating fluid, converting it primarily into mechanical power and then into electric power.

More precisely, the assembly 1 can be installed on the duct 2, preferably derived through by-pass from a portion 3 of a hydraulic network, or differently arranged, through the interposition of suitable interception means 4, predisposed to allow for example possible maintenance operations of the assembly 1. The assembly 1 can be installed, for example, in any hydraulic network, a transportation or conveying and supplying network of a fluid, in particular water for domestic use or intended for other uses.

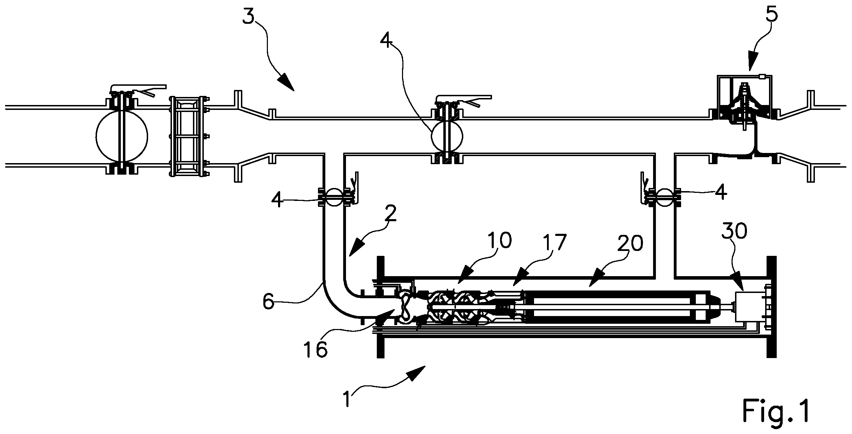

At the above mentioned portion 3, for example downstream of the derived duct 2 or between the derived branches of the same duct 3, an auxiliary device 5 can be arranged, for example a valve control device for controlling the pressure and/or the flow rate of the fluid, of known type. For example, the auxiliary device 5 can be of the membrane type, as it is shown in Figure 1, preferably equipped with suitable automatic operation circuits, according to the working mode, to check that in the network a predetermined pressure value of the circulating fluid is maintained. The auxiliary device 5 can be used alternatively to the assembly according to the invention, for example in case the functioning of the same assembly requires to be interrupted for allowing maintenance operations.

The energy control and recovery assembly comprises a pump member 10 with turbine functioning, that is with inverse cycle functioning, a generator member 20 connected with the pump member 10 and an adjustment device 30, for the adjustment of the parameters of the flow outgoing from the duct 2.

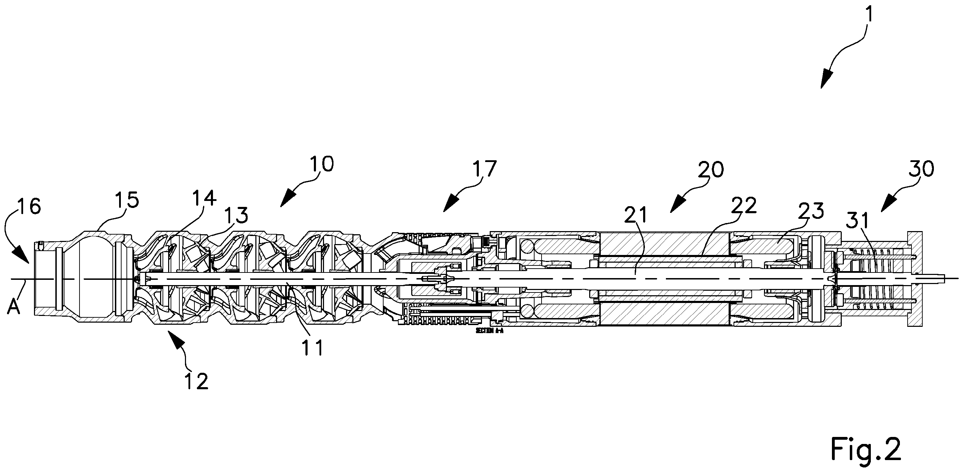

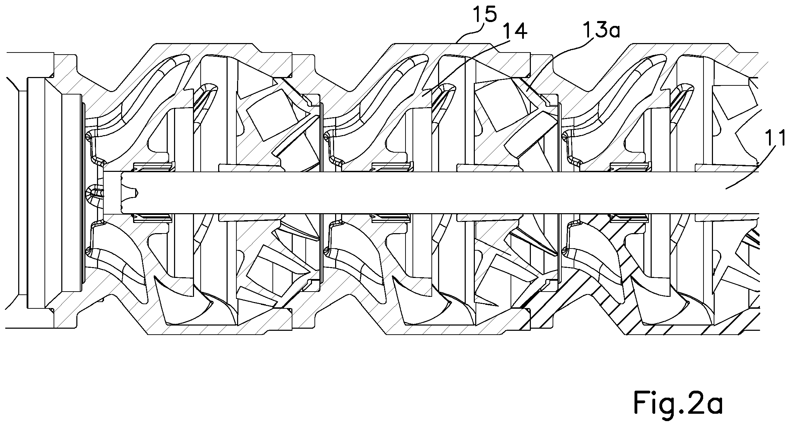

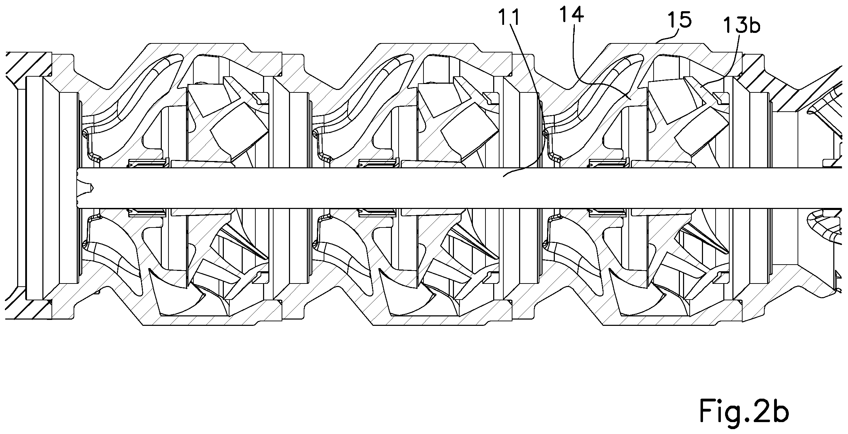

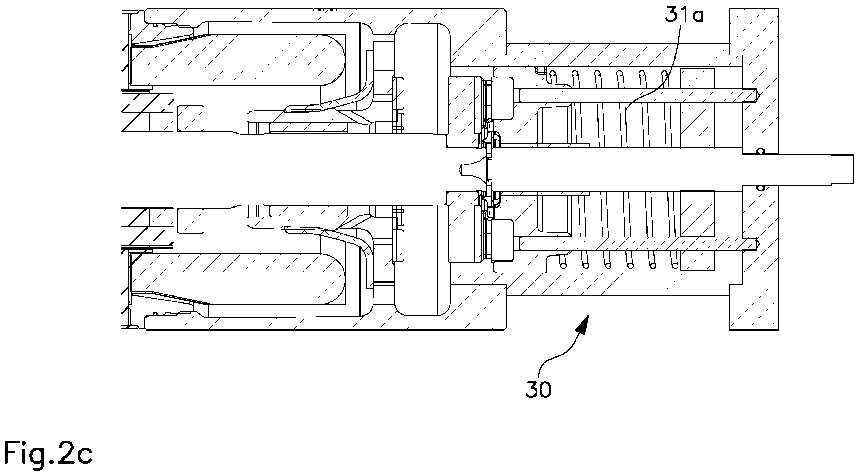

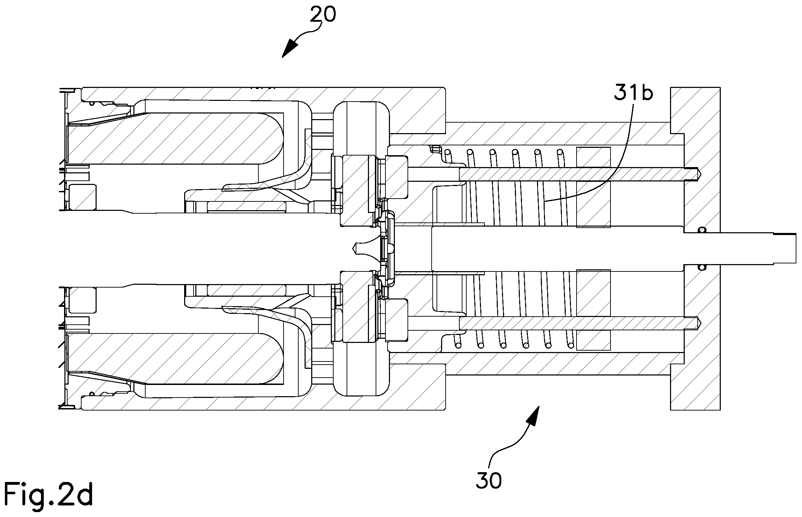

The pump member 10 is a suitably shaped centrifugal pump comprising a shaft 11 oriented along a longitudinal axis A, on which, preferably, a plurality of working stages 12 is arranged in succession (see Figure 2).

Each working stage 12 comprises, in known manner, an impeller 13 keyed on the shaft 11 of the pump member 10 and a diffuser member 14 integral to the body 15 of the pump member 10.

The pump member 10, which is used in the assembly 1 with turbine inverse functioning, comprises an inlet portion 16 and an outlet portion 17 for the crossing fluid, respectively corresponding to the suction portion and to the discharge portion in the functioning of a centrifugal pump.

The pump member 10 is connected with the power generator member 20, destined to convert the mechanical power generated by the pump member 10 into available electric power.

More precisely, the generator member 20 comprises a generator shaft 21 connected in coaxial manner with the shaft 11 of the pump member 10, through connection means of known type (see Figure 2). In the illustrated example, the connection between the shaft 11 of the pump member 10 and the generator shaft 21 is placed at the cited outlet portion 17 of the fluid.

In substance, the shaft 11 of the pump member 10 and the connection shaft 21 are fixed so as to work, in use as a single rotating shaft.

In known manner, the electric generator member 20 comprises a rotary part 22 and a stator part 23, arranged about the connection shaft 21, to allow the production of electric power by conversion of the mechanical power transmitted by the shaft 11 of the pump member 10.

The cited adjustment device 30 comprises axial handling means 31 for axially moving the shaft 11 of the pump member 10, predisposed to vary the outflow of the fluid through each impeller 13 of the pump member 10, so as to keep constant, in particular equal to a predetermined and optimal value, the fluid pressure within the duct downstream of the recovery assembly 1.

More precisely, such handling means 31 are predisposed to axially move the impeller 13 of the hydraulic stages 12, thus varying the inlet cross-section for the circulating fluid.

Following this axial movement, the impeller 13 and the diffuser member 14 of each hydraulic stage 12 are reciprocally approached or distanced, so as to modify the conformation of each hydraulic stage 12 of the pump member 10. In other words, the impeller 13 and the diffuser member 14 of each hydraulic stage 12 have a conformation such that, for example, after a mutual axial approaching, the hydraulic flow is at least partially diverted externally to the impellers 13 (see Figures 2a and 2b). The hydraulic stages 12 are mounted along the shaft 11 so as to allow, during functioning, a movement up to a determined axial displacement of the impellers 13 with respect to the diffuser members 14.

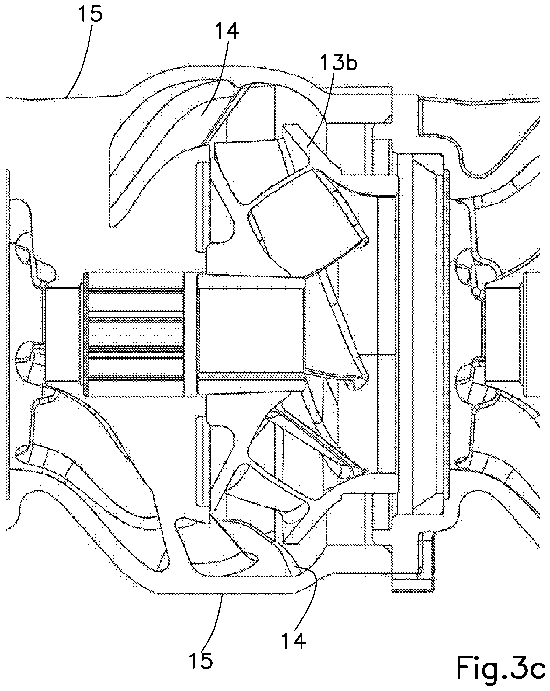

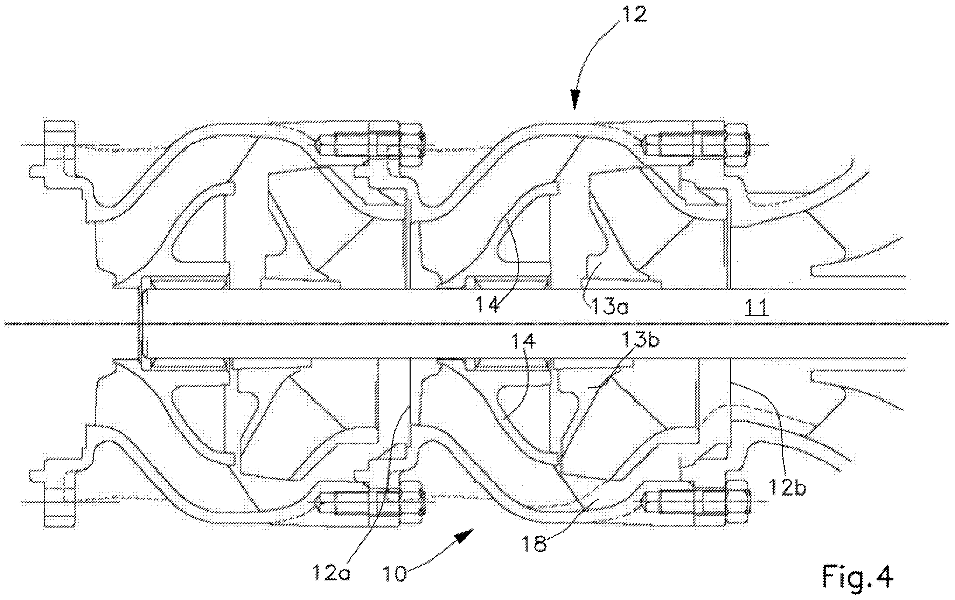

As a consequence, the flow circulating through a moved impeller 13 is divided in corresponding manner. In particular, the hydraulic flow incoming through an inlet portion 12a of the hydraulic stage 12 may be divided into a quota that passes through the impeller 13, contributing to power recovery, and in a remaining quota, which by-passes the power recovery and circulates externally to the body of the impeller 13 then directly reaching the outlet portion 12b of the same hydraulic stage 12, through a gap 18 defined between the moved impeller 13 and the pump body 15 (see Figures 3c and 4).

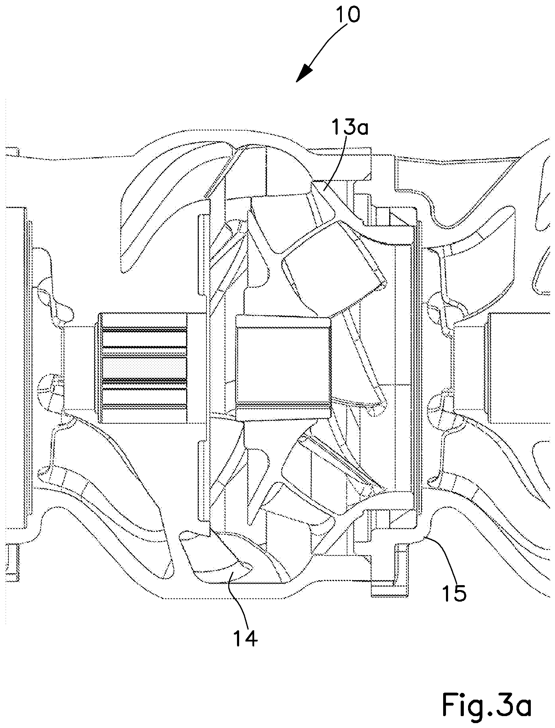

The impeller 13 is thus axially movable from an operative condition of maximum power conversion 13a, of design, at which the flow entering the inlet portion 12a of the hydraulic stage 12 entirely flows through the impeller 13 itself, thus enabling the conversion into mechanical power of a corresponding power maximum quota of the hydraulic flow, that is, producing downstream of the assembly 1 a determined maximum difference, in particular a reduction, of the fluid pressure (see Figure 3a), to an operative condition of maximum power conversion 13b, at which, after a maximum axial displacement of the impeller 13, a maximum quota or the entire flow rate of the hydraulic flow entering through the inlet portion 12a is intercepted by the gap 18 (see Figure 3c), thus allowing the conversion of a minimum or null quota of power of the incoming hydraulic flow into mechanical power, that is, downstream of the assembly 1 producing a minimum or null difference, determined, in particular a reduction, of the fluid pressure.

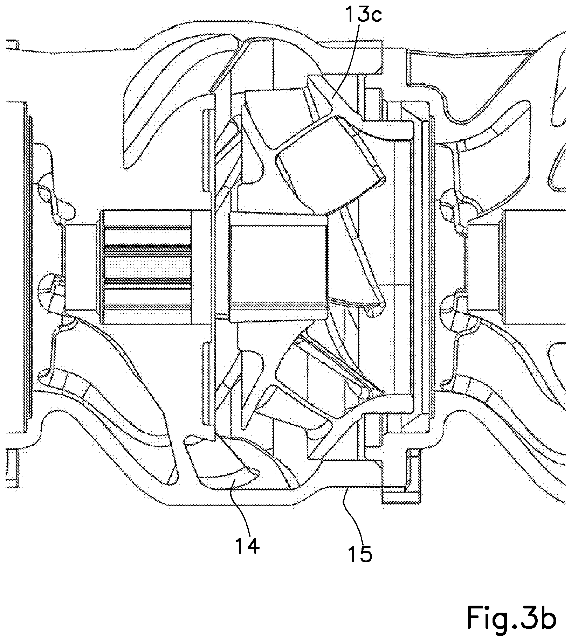

The impeller 13 is movable between the aforementioned working conditions 13a, 13b through working conditions of intermediate power conversion 13c (see for example Figure 3b).

In Figure 4 a portion of the pump member 10 is represented in axial cross-section, in which a half-cross-section shows the maximum power conversion 13a, that is of minimum axial displacement 13a, at which the whole hydraulic flow can cross the impeller 13 and the other half-cross-section with respect to the longitudinal axis A shows instead the maximum axial displacement working condition 13b, in which at least a part of the hydraulic flow can be diverted externally to the impeller 13, through the gap 18.

It is possible to provide for the impeller 13 a further working condition, different from the cited design condition, in which the converted pressure drop is maximum. In such working condition, further dispersion of the flow entering the impeller 13 and outflowing in whirling motion within the pump member 10 can be generated. Such further working condition, not illustrated for the sake of simplicity, can be obtained by modifying the impeller 13 and the diffuser member 14 so that, in the maximum pressure reduction condition, the entry of the flow in the impeller 13 is partially occluded by the inner wall of the diffuser member 14.

In the illustrated case, the cited handling means 31 shape spring means of the elastic type, associated with the containment casing of the generator member 20 or, differently, as it is described in the following. The spring means 31 can be suitably pre-loaded, so as to control in automatic manner, during functioning, the displacement of the shaft 11 of the pump member 10, so as to compensate the axial thrust acting on the shaft of the pump member 10 and ensuring keeping a predetermined pressure value of the circulating fluid downstream of the duct 2.

In corresponding manner, the cited spring means 31 can be mobile at least between a first condition 31a, corresponding to the cited working condition of maximum power conversion 13a, of design, of the impeller 13 (see Figure 2c), and a second condition 31b, of maximum compression, corresponding instead to the cited working condition of minimum power conversion 13b, of maximum axial displacement of the impeller 13 (see Figure 2d).

The cited dynamic contrast means 31 only require a starting adjustment, as a function of the operating conditions, for then ensuring, in use, an automatic adjustment of the parameters of the circulating fluid.

As an alternative, it is possible to provide dynamic contrast means of different type, for example pneumatic or hydraulic, as it is described in the following.

The functioning of the energy control and recovery assembly from a water flow according to the invention is easy to understand from the preceding description.

In a starting preparation step, the adjustment device 30 is calibrated in suitable manner, so as to ensure keeping in automatic manner a predetermined value of fluid pressure, downstream of the duct 2, during the functioning.

The fluid flows through the inlet portion 16 of the pump member 10 prearranged with inverse cycle functioning and outflows through the exit portion 17.

The adjustment device 30 then automatically moves, during functioning, the shaft 11 of the pump member along the longitudinal axis A, as a function of the axial thrust, so as to generate through the pump member 10 a pressure drop of the circulating fluid adjusted in corresponding manner and such as to ensure downstream of the duct 2 the desired pressure value of the fluid.

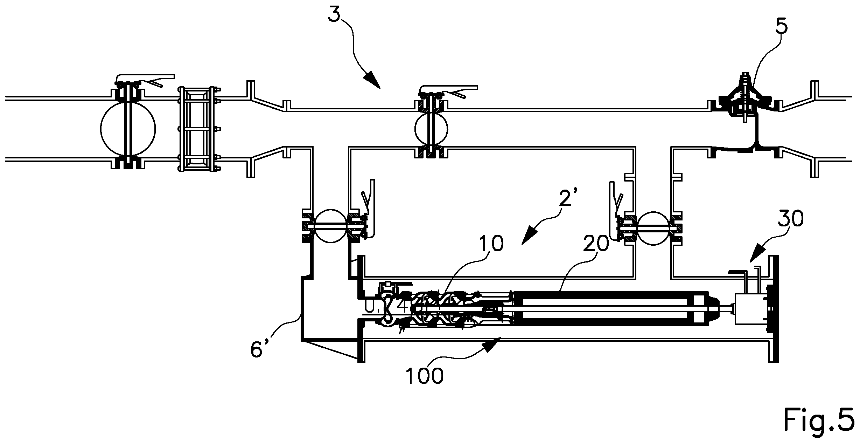

Figure 5 shows a different installation arrangement of the energy control and recovery assembly 100, which axial handling means 30 comprise a hydraulic actuator member, oleodynamic or pneumatic, associated with an edge of the generator member 20, for controlling the axial displacement of the shaft of the pump member 10. In addition, in this case the duct 2' includes connecting means 6' to the network 3 with angular profile and polygonal cross-section rather than curved profile and circular cross-section, differently from the connection means 6 provided in the arrangement shown in Figure 1. The functioning of the assembly 1 is very similar to the one previously described.

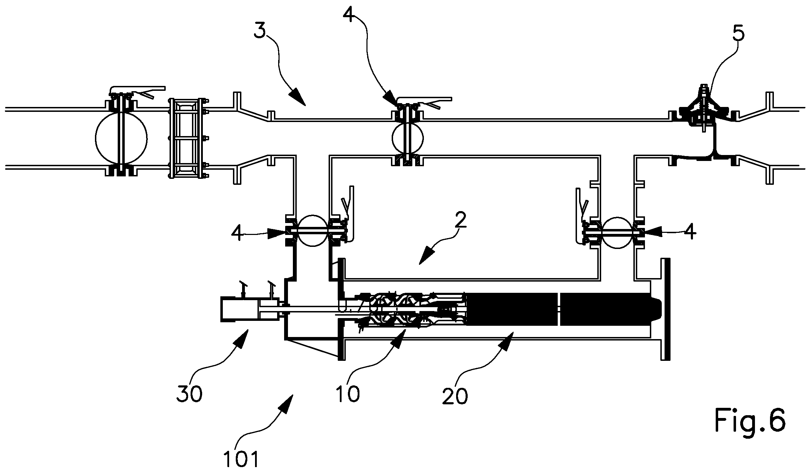

Figure 6 shows a further installation arrangement of the energy control and recovery assembly 101. According to such arrangement the adjustment device 30 comprises actuator means, for example an oleodynamic cylinder, in which the respective mobile stem or piston is directly connected to the shaft of the pump member 10, to vary the hydraulic flow through the impellers 13, as it was previously described, thus performing both the power recovery and the adjustment of the flow rate of the same hydraulic flow.

Figures 7 and 8 show cross-sectional and plant view of a different installation arrangement, equally advantageous, in which the assembly 110 is predisposed in an underground well 7, with vertical orientation of the longitudinal axis A'. Moreover, it is to be observed that in the illustrated case, the auxiliary device 5 is interposed between the derivation branches of the duct 2.

In this case, the handling means 31 comprise elastic means, preferably a helical spring, arranged so as to press a longitudinal stem integral to the shaft of the generator member 20 and then to the shaft 11 of the pump member, connected to this latter. Instead, a linear actuator member 32 can be associated with the opposite edge of the assembly 101, for example at the head of the shaft 11 of the pump member 10, to perform the desired adjustment of the contrast action exerted by the helical spring 31.

Finally, Figure 9 shows a further installation arrangement of the energy control and recovery assembly 111, vertically mounted inside a well, as in the case illustrated in Figure 7. In this case, the axial handling means 30 comprise a pneumatic or hydraulic actuator member 33, in which the respective actuation stem is inferiorly connected to the shaft of the generator member 20, so as to perform the desired adjustment of the axial displacement of the impellers 13 with respect to the diffuser members 14 of the pump member 10, in a way very similar to what has been previously described.

In practice, the used materials as well as the size and shape may vary according to the needs.

Should the technical characteristics mentioned in the claims be followed by reference signs, such reference signs were comprised for the sole purpose of increasing the understanding of the claims and thus they shall not be deemed limiting the scope of the element identified by such reference signs by way of example.

## Claims

1. Energy control and recovery assembly, predisposed to be installed in a duct (2, 2') of a hydraulic network, in particular a water supply network, crossed by a fluid, thereby generating a corresponding hydraulic flow, comprising a centrifugal pump member (10) with turbine operation, for at least partially converting the power of said hydraulic flow into mechanical power, said pump member (10) comprising a fixed containment body (15), a shaft (11) arranged along a longitudinal axis (A, A') inside said body (15) and at least one hydraulic stage (12) provided with an impeller (13) mounted integrally to said shaft (11) and a diffuser member (14) shaped by said body (15), said fluid entering said at least one hydraulic stage (12) through an inlet portion (12a) and outgoing from said hydraulic stage (12) through an outlet portion (12b), a generator member (20) connected with said pump member (10), for converting the mechanical power converted by said pump member (10) into electric power, and an adjustment device (30) acting on said shaft (11), wherein said adjustment device (30) comprises axial handling means (31) for said at least one impeller (13), relatively to said body (15), a gap (18) being obtained between said at least one impeller (13) further to an axial displacement of said axial handling means (31) and a portion of said body (15) at said hydraulic stage (12) so as to subtract a part of said hydraulic flow entering through said inlet portion (12a) from the crossing of said impeller (13), and so as to divert said subtracted part through said gap (18) directly towards said outlet portion (12b) of said at least one hydraulic stage (12), for adjusting the parameters of said flow outgoing from said duct (2, 2'), said at least one impeller (13) being axially mobile along said longitudinal axis (A, A') at least between an operative condition of maximum power conversion (13a), at which said hydraulic flow entering said inlet portion (12a) entirely outflows through said impeller (13), a corresponding maximum quota of power of said hydraulic flow being converted, in this way, into mechanical power, and an operative condition of minimum power conversion (13b), at which, further to said maximum axial displacement of said impeller (13), said gap (18) intercepts, in a said maximum part or entirely, said hydraulic flow, a corresponding minimum quota of power of said hydraulic flow being converted, in this way, into mechanical power, said at least one impeller (13) being axially mobile along said longitudinal axis (A, A') between said operative condition of maximum power conversion (13a) and said operative condition of minimum power conversion (13b) through intermediate operative conditions (13c) of power conversion, **characterized in that** said axial handling means (31) are made up of contrast elastic or pneumatic or hydraulic means, for opposing the axial thrust exerted by said crossing hydraulic flow on said shaft (11) integral to said at least one impeller (13).

2. Assembly according to claim 1, **characterized in that** said axial displacement performed by said axial handling means (31) divides said hydraulic flow entering inside said inlet portion (12a) in said subtracted part, crossing said gap (18), and in a remaining part, crossing said impeller (13).

3. Assembly according to claim 1 or 2, **characterized in that** said contrast elastic means are of the helical spring type.

4. Assembly according to one of the preceding claims, **characterized in that** said axial handling means (31) are arranged along said longitudinal axis (A, A').

5. Assembly according to one of the preceding claims, **characterized in that** said axial handling means (31) are associated with said generator member (20), said generator member (20) comprising a connection shaft (21) connected with said shaft (11) of said pump member (10) and said axial handling means (31) acting on said connection shaft (21).

6. Assembly according to one of the preceding claims, **characterized in that** said generator member (20) is an asynchronous electric motor member of submerged type, configured to function in reverse cycle.

## Patentansprüche

1. Energiesteuer- und Energierückgewinnungsanordnung, die ausgelegt ist, in einer Leitung (2, 2') eines hydraulischen Netzwerks montiert zu werden, insbesondere ein Wasserzufuhrnetzwerk, das durch eine Flüssigkeit durchgesetzt wird, indem dadurch eine entsprechende hydraulische Strömung erzeugt wird, umfassend ein Kreiselpumpenelement (10) mit Turbinenbetrieb, um die Leistung der hydraulischen Strömung in mechanische Leistung zumindest teilweise umzuwandeln, wobei das Pumpenelement (10) einen festen Aufnahmekörper (15), eine Welle (11), die entlang einer Längsachse (A, A') innerhalb des Körpers (15) angeordnet ist, und zumindest eine hydraulische Stufe (12) umfasst, die mit einem Laufrad (13), der einstückig an der Welle (11) montiert ist, und mit einem Diffusorelement (14) versehen ist, das durch den Körper (15) ausgebildet ist, wobei die Flüssigkeit in zumindest eine hydraulische Stufe (12) durch einen Einlassabschnitt (12a) eintritt und aus der hydraulischen Stufe (12) durch einen Auslassabschnitt (12b) austritt, ein Generatorelement (20), das mit dem Pumpenelement (10) verbunden ist, um die durch das Pumpenelement (10) umgewandelte mechanische Leistung in elektrische Leistung umzuwandeln, und eine Verstellvorrichtung (30), die auf der Welle (11) arbeitet, wobei die Verstellvorrichtung (30) axiale Handhabungsmittel (31) für das zumindest eine Laufrad (13) umfasst, wobei ein Spalt (18) in Bezug auf den Körper (15) zwischen dem zumindest einen Laufrad (13) bezugnehmend auf eine axiale Verschiebung der axialen Handhabungsmittel (31) und einem Abschnitt des Körpers (15) an der hydraulischen Stufe (12) erhalten wird, um ein Teil der hydraulischen Strömung, die durch den Einlassabschnitt (12a) aus der Kreuzung des Laufrads (13) eintritt, zu subtrahieren, und um das subtrahierte Teil durch den Spalt (18) unmittelbar zum Auslassabschnitt (12b) der zumindest einen hydraulischen Stufe (12) zu lenken, um die Parameter der Strömung, die aus der Leitung (2, 2') austritt, zu regulieren, wobei das zumindest eine Laufrad (13) entlang der Längsachse (A, A') axial beweglich ist, und zwar zumindest zwischen einer Betriebsbedingung maximaler Leistungsumwandlung (13a), an der die hydraulische Strömung, die in den Einlassabschnitt (12a) eintritt, durch das Laufrad (13) vollständig austritt, wobei eine entsprechende Menge an Leistung der hydraulischen Strömung dadurch in mechanische Leistung umgewandelt wird, und einer Betriebsbedingung minimaler Leistungsumwandlung (13b), an der, bezugnehmend auf die maximale, axiale Verschiebung des Laufrads (13), der Spalt (18) die hydraulische Strömung in dem einen maximalen Teil oder vollständig aufnimmt, wobei eine entsprechende, minimale Menge an Leistung der hydraulischen Strömung dadurch in mechanische Leistung umgewandelt wird, wobei das zumindest eine Laufrad (13) entlang der Längsachse (A, A') axial beweglich ist, und zwar zwischen der Betriebsbedingung maximaler Leistungsumwandlung (13a) und der Betriebsbedingung minimaler Leistungsumwandlung (13b), durch Zwischenbetriebsbedingungen (13c) der Leistungsumwandlung, **dadurch gekennzeichnet, dass** die axialen Handhabungsmittel aus gegenelastischen oder pneumatischen oder hydraulischen Mitteln bestehen, um dem axialen Druck entgegenzuwirken, der durch die durchgehende Strömung auf der mit dem zumindest einen Laufrad (13) integralen Welle (11) ausgeübt wird.

2. Anordnung nach Anspruch 1, **dadurch gekennzeichnet, dass** die axiale Verschiebung, die durch die axialen Handhabungsmittel (31) durchgeführt wird, die hydraulische Strömung, die in den Einlassabschnitt (12a) eintritt, in das subtrahierte Teil, das den Spalt (18) durchgeht, und in ein restliches Teil, das das Laufrad (13) durchgeht, trennt.

3. Anordnung nach Anspruch 1 oder 2, **dadurch gekennzeichnet, dass** die gegenelastischen Mittel vom Schraubenfedertyp sind.

4. Anordnung nach einem der vorhergehenden Ansprüche, **dadurch gekennzeichnet, dass** die axialen Handhabungsmittel (31) entlang der Längsachse (A, A') angeordnet sind.

5. Anordnung nach einem der vorhergehenden Ansprüche, **dadurch gekennzeichnet, dass** die axialen Handhabungsmittel (31) dem Generatorelement (20) zugeordnet sind, wobei das Generatorelement (20) eine Verbindungswelle (21) umfasst, die mit der Welle (11) des Pumpenelements (10) verbunden ist, und wobei die axialen Handhabungsmittel (31) auf der Verbindungswelle (21) arbeiten.

6. Anordnung nach einem der vorhergehenden Ansprüche, **dadurch gekennzeichnet, dass** das Generatorelement (20) ein asynchrones Elektromotorelement vom gesenkten Typ ist, das ausgebildet ist, um im Rückwärtszyklus zu arbeiten.

## Revendications

1. Ensemble de commande et de récupération d'énergie, prédisposé pour être installé dans un conduit (2, 2') d'un réseau hydraulique, en particulier d'un réseau d'alimentation d'eau, traversé par un fluide, générant ainsi un débit hydraulique correspondant, comprenant un élément de pompe centrifuge (10) avec fonctionnement à turbine, pour convertir au moins partiellement la puissance dudit débit hydraulique en puissance mécanique, ledit élément de pompe (10) comprenant un corps de contenance fixe (15), un arbre (11) disposé le long d'un axe longitudinal (A, A') à l'intérieur dudit corps (15), et au moins un étage hydraulique (12) pourvu d'un impulseur (13) monté de façon solidaire sur ledit arbre (11) et un élément diffuseur (14) formé par ledit corps (15), ledit fluide pénétrant dans ledit au moins un étage hydraulique (12) à travers une partie d'entrée (12a) et sortant dudit étage hydraulique (12) à travers une partie de sortie (12b), un élément générateur (20) connecté audit élément de pompe (10), pour convertir la puissance mécanique, convertie par ledit élément de pompe (10), en énergie électrique, et un dispositif de réglage (30) agissant sur ledit arbre (11), dans lequel ledit dispositif de réglage (30) comprend des moyens de manipulation axiale (31) pour ladite au moins un impulseur (13), par rapport audit corps (15), un écartement (18) étant obtenu entre ledit au moins un impulseur (13) suite à un déplacement axial dudit moyen de manipulation axiale (31) et une partie dudit corps (15) au niveau dudit étage hydraulique (12) de manière à soustraire une partie dudit débit hydraulique entrant à travers ladite partie d'entrée (12a) depuis le croisement dudit impulseur (13) et de manière à dévier ladite partie soustraite à travers ledit écartement (18) directement vers ladite partie de sortie (12b) dudit au moins un étage hydraulique (12) pour ajuster les paramètres dudit débit sortant dudit conduit (2, 2'), ledit au moins un impulseur (13) étant axialement mobile le long dudit axe longitudinal (A, A') au moins entre une condition opérationnelle de conversion de puissance maximale (13a), à laquelle ledit débit hydraulique pénétrant dans ladite partie d'entrée (12a) s'écoule entièrement à travers ledit impulseur (13), une quantité majeure de puissance correspondante dudit débit hydraulique étant ainsi convertie en puissance mécanique, et une condition opérationnelle de conversion de puissance minimale (13b), à laquelle, suite audit déplacement axial maximal dudit impulseur (13), ledit écartement (18) intercepte, dans une partie maximale ou en totalité, ledit débit hydraulique, une quantité minime de puissance correspondante dudit débit hydraulique étant ainsi convertie en puissance mécanique, ledit au moins un impulseur (13) étant axialement mobile le long dudit axe longitudinal (A, A') entre ladite condition opérationnelle de conversion de puissance maximale (13a) et ladite condition opérationnelle de conversion de puissance minimale (13b) par des conditions opérationnelles intermédiaires (13c) de conversion de puissance, **caractérisé en ce que** lesdits moyens de manipulation axiale sont constitués de moyens de contraste élastiques ou pneumatiques ou hydrauliques, destinés à s'opposer à la poussée axiale exercée par ledit débit hydraulique de croisement sur ledit arbre (11) solidaire dudit au moins un impulseur (13).

2. Ensemble selon la revendication 1, **caractérisé en ce que** ledit déplacement axial effectué par lesdits moyens de manipulation axiale (31) divise ledit débit hydraulique entrant à l'intérieur de ladite partie d'entrée (12a) dans ladite partie soustraite, qui traverse ledit écartement (18) et dans une partie restante, qui traverse ledit impulseur (13).

3. Ensemble selon la revendication 1 ou 2, **caractérisé en ce que** lesdits moyens élastiques de contraste sont du type à ressort hélicoïdal.

4. Ensemble selon l'une des revendications précédentes, **caractérisé en ce que** lesdits moyens de manipulation axiale (31) sont disposés le long dudit axe longitudinal (A, A').

5. Ensemble selon l'une des revendications précédentes, **caractérisé en ce que** lesdits moyens de manipulation axiale (31) sont associés audit organe générateur (20), ledit organe générateur (20) comprenant un arbre de liaison (21) relié audit arbre (11) dudit élément de pompe (10) et lesdits moyens de manipulation axiale (31) agissant sur ledit arbre de liaison (21).

6. Ensemble selon l'une des revendications précédentes, **caractérisé en ce que** ledit organe générateur (20) est un organe de moteur électrique asynchrone de type immergé, configuré pour fonctionner en cycle inverse.
